# EUROPEAN PATENT APPLICATION

(11) **EP 4 442 668 A1**
(43) Date of publication of application: **09.10.2024**
(21) Application number: 23290010.0
(22) Date of filing: 03.04.2023
(51) Int. Cl.: C04B 28/04, C04B 40/00

(54) **SUPPLEMENTARY CEMENTITIOUS MATERIAL AND METHOD FOR MANUFACTURING THE SAME**

(71) Applicant: Holcim Technology Ltd, 5113 Holderbank (CH)
(72) Inventor: Souza Nunes, Thiago, 69800 Saint-Priest (FR); Termkhajornkit, Pipat, 69007 Lyon (FR); Benard, Philippe, 69007 Lyon (FR)
(74) Representative: HGF

(57) **Abstract**

The invention regards to a Supplementary cementitious material (SCM) comprising calcined clay (CC) and concrete demolition waste (CW) In a ratio CW/CC from 0.32 to 3.

## Description

The invention regards to a Supplementary cementitious material and a method for manufacturing the same.

As the world's largest manufactured product by mass, cement is responsible for 10% of the total anthropogenic CO₂ emissions, or about 6% of the total anthropogenic greenhouse gases. Due to rising population, continuous urbanization and development of infrastructure with it, the global cement production, an essential constituent of concrete, is expected to continuously increase in the future. The biggest challenge of the cement industry nowadays is therefore the reduction of these CO₂ emissions, in order to contribute to achieving the United Nations Sustainable Development Goals.

A promising and well-established way to do so is by using supplementary cementitious materials (SCMs) as partial cement replacement in concrete. It has been well-reported in literature the benefits of using cement blends with SCMs such as improved mechanical and durability properties of the cements, in addition to the lowering of clinker factor. The amount of cement that can be replaced varies with the physico-chemical properties as well as the availability of the SCMs. Among different available SCMs, the blast furnace slag (which is a by-product from the steel industry) is only the material that can be used solely as a·main constituent for developing cements (CEM III/B) with very low clinker factor (0.2-0.35) and achieves a strength class of 42.5 N, as per EN 197-1:2011. The world-wide availability of blast furnace slag is estimated to be around 5-10% of the annual cement production. Therefore, there is a strong need for alternative sources of cementitious material that are available abundantly in the world and can reduce the clinker factor in cement to ≤0.35 with a strength class of 42.5 N.

Recently, a growing scientific and industrial interest in developing more sustainable binder has been brought to combining multiple supplementary cementitious materials in cements. Limestone calcined clay cement (LC3) is a one family of such blended cements where cement is partially replaced using a combination of calcined clay and limestone. The LC3 system with 50% of clinker replaced by 30% calcined clay with metakaolin (MK) content of 40-60% and 15% limestone shows similar strength to conventional Portland cement from 7 days onwards. This system can save between 30-40% of the CO₂ emission per ton of cement produced compared to Ordinary Portland Cement (OPC) or CEM I and became one of the most promising solutions for the cement industries.

More recently in the RILEM Spring Convention 2022, Fernando. M introduced further low-carbon LC3 cement with only 25-35% of clinker, 40-45% calcined clay with metakaolin (MK) content of 60% and 20-25% of limestone. However, these new low clinker LC3 systems can match only a strength class of 32.5 N at all ages.

EP3224219 discloses a calcined clay that is obtained from dolomitic raw clay.

EP2429966 discloses the benefits of combining calcined clays with limestone to improve the performance of the binder. This disclosure also teaches that preferentially, the limestone is not heat-treated.

It is apparent that with a supplementary cementitious material (SCM) it is not likely to achieve high strength classes and low clinker factors as blended cements with a high volume of calcined clay (>60wt%/binder) have an expected rheology due to its very high water demand and low availability of Portlandite from cement reaction.

The object of the invention is to provide for a SCM which allows the reduction of the clinker factor in a blend with cement while maximizing the achievable strength.

This is achieved by means of a supplementary cementitious material according to claim 1. Further embodiments are specified in the depending sub claims.

It is a further object to provide for a binder composition with a reduced clinker factor and a maximized achievable strength.

This is achieved by means of a binder composition according to claim 13. Further embodiments are specified in the depending sub claims.

It is still another object of the invention to provide for a method for producing that SCM.

This is achieved by means of the method according to claim 17. Further embodiments are specified in the depending sub claims.

In the following all percentages are weight percent (wt-%) unless otherwise indicated.

Concrete waste and calcined clays are known mineral components used for the preparation of cement binders. However, their reactivity, especially at earlier ages is low, resulting in slow strength development. This is an issue for using these low carbon binders in many applications in the construction industry.

Concrete waste is here defined as specially selected and prepared mineral material coming from plants producing recycled concrete aggregates and/or sands fulfilling the following requirement on the following constituents:
- At least 90 wt.-% of concrete, concrete products, mortar, concrete masonry units, unbound aggregate, natural stone, and/or hydraulically bound aggregate; and
- Not more than 10 wt.-% of clay masonry units (i.e., bricks and tiles), calcium silicate masonry units, and/or aerated non-floating concrete.

Concrete waste comprises hardened cement paste.

There is a permanent and urgent need to develop cements and systems that maximize strength development while minimizing the amount of Portland clinker, especially strength at earlier ages.

It was surprisingly found that the combination of fine particles of concrete waste (CW) and calcined clays results in a synergistic effect that increases strength at 2 and 7 days. It was further found that nearly any calcined clay is suitable. It is advantageous if the concrete demolition waste contains at least 15 wt.-% of hardened cement paste.

The synergistic effect couldn't be expected as the constituents CW and calcined clay (CC) as such do not commit to the strength development as they do in combination. This synergistic effect between CW and CC leads to increased early age strength results. The expected dilution effect of the CW to the strength development of a binder composition with the SCM did not occur. Much to the contrary the SCM according to the invention contributes to the strength development of a respective binder composition.

For the evaluation the respective constituents were analyzed chemically, mineralogically and with regard to the fineness. X-ray fluorescence analysis was performed on all materials to determine their chemical composition. The fineness of all materials was measured by laser diffraction analysis, BET and Blaine specific surface area.

The mineralogy of the calcined clays and calcined marls was measured by XRD Rietveld method.

X-ray diffraction (XRD) measurements were made of powdered samples which were hand . ground to pass a 63 µm sieve. A D8 X-ray Diffractometer from Bruker was used which was operated using Cu Kα radiation at an acceleration voltage of 30 kV and a current of 10 mA, scanning at 2θ range of 4-65_{°}, with a step size of 0.02_{°} and a counting time of 0.6 s per step.

The quantification of the phases present in the samples was achieved by Rietveld refinement using Topas Academic v6 software. The quantification of amorphous or unidentified phases was determined with partially or not known crystal structures (PONKCS) method.

The Rwp (weighted profile R value) is the value that indicates how good or bad is the predicted fitting as compared to the experimental. The lower this value the better the prediction.

The experiments led to results which will be later discussed.

The carbonation methods mentioned below were used for the examples below, at laboratory level. At industrial level, any known carbonation method is suitable, by for example exposing the materials to a flow of gas that is enriched in CO₂, such as flue gas from a cement plant.

Thus in a first aspect of the invention the invention relates to a supplementary cementitious material (SCM) comprising calcined clay (CC) and concrete demolition waste (CW) in a ratio CW/CC from 0.32 to 3.15.

In an embodiment the ratio between CW/CC is 3.15 or 3 or 2.7 or 2.5 or 2.3 or 2.1 or 2.0 or 1.8 or 1.5 or 1.3 or 1.1 or 1 or 0.9 or 0.7 or 0.5 or 0.4 or 0.32.

In an embodiment the calcined clay (CC) is made from a clay or a marl or a blend of a clay and a marl.

In an embodiment the calcined clay has a content of < 15 wt.-% of CaO based on the total weight of the clay.

In an embodiment the marl has a content of < 15 wt.-% CaCO₃ , in particular < 7 wt.-% of CaCO₃ based on the total weight of the Marl .

In an embodiment the CW has a CaO content of > 5 wt.-% based on the total weight of the CW.

In an embodiment the clay is a kaolinitic clay.

In an embodiment the clay has a montmorillonite content of less than 5 wt.-% based on the total weight of the clay.

In an embodiment the CW is a CW as it is or a carbonated CW and/or a calcined CW or a blend of two or more of the aforementioned CW.

In an embodiment the calcined clay has a Blaine fineness of at least 5000 cm²/g.

In an embodiment the CW has a Blaine fineness of at least 4000 cm²/g.

In an embodiment the CW contains at least 15 wt.-% of hardened cement paste.

In a further aspect of the invention pertains to a binder composition comprising at least the supplementary cementitious material (SCM) according to one of the preceding claims and portland cement clinker or ground portland cement and calcium sulfate.

In an embodiment the binder composition is comprising portland cement from 50 wt.-% to 75 wt.-% based on the total weight of the binder and SCM from 25 wt.-% to 50 wt.-% based on the total weight of the binder.

In still a further aspect of the invention pertains to a concrete composition comprising the aforementioned Binder composition with a aforementioned SCM as well as aggregates.

In still a further aspect of the invention regards to the use of the aforementioned supplementary cementitious material in cement compositions or in concrete compositions or for preparing a cement or concrete slurry.

A further aspect of the inventions pertains to a method for the production of a supplementary cementitious material (SCM) wherein calcined clay (CC) and concrete demolition waste (CW) in a ratio between CW/CC from 0.32 to 3.15.

In an embodiment the ratio between CW/CC is chosen to 3.15 or 3 or 2.7 or 2.5, or 2.3 or 2.1 or 2.0 or 1.8 or 1.5 or 1.3 or 1.1 or 1 or 0.9 or 0.7 or 0.5 or 0.4 or 0.32.

In an embodiment the calcination of the Calcined clay is achieved in a rotary kiln for 30 minutes to 2 hours, in particular 30 minutes to one hour.

In an embodiment the calcination of the CW is achieved in a rotary kiln for 30 minutes to 2 hours, in particular 30 minutes to one hour. In an embodiment calcination is conducted at temperatures above 750°C to 1000°C, in particular 800°C to 950°C, preferred 800°C to 900°C.

In an embodiment CW and CC are calcined together

In an embodiment, the clay and the CW are calcined together.

In an embodiment the calcined clay is ground during or after calcination to a Blaine fineness of at least 5000 cm²/g.

In an embodiment the CW is ground before, during or after calcination to a Blaine fineness of at least 4000 cm²/g.

The invention is further described by way of examples and drawings wherein the drawings show:

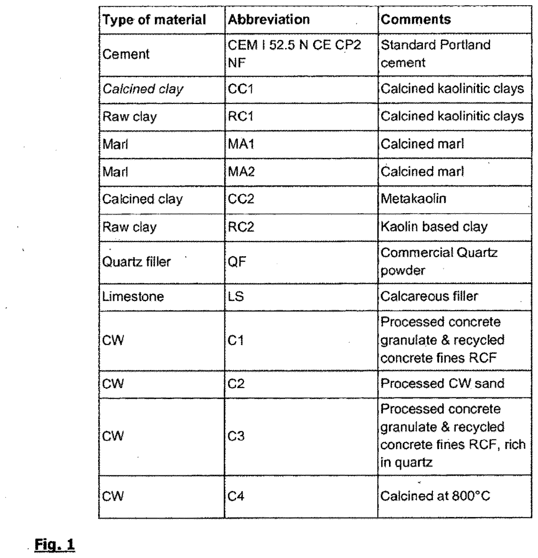

- Fig. 1:: a table showing the materials used;

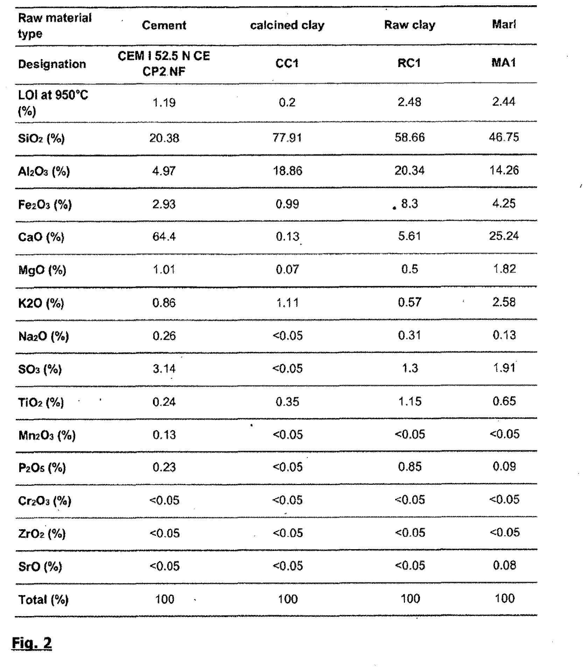

- Fig. 2:: a table showing the chemical composition of the materials used;

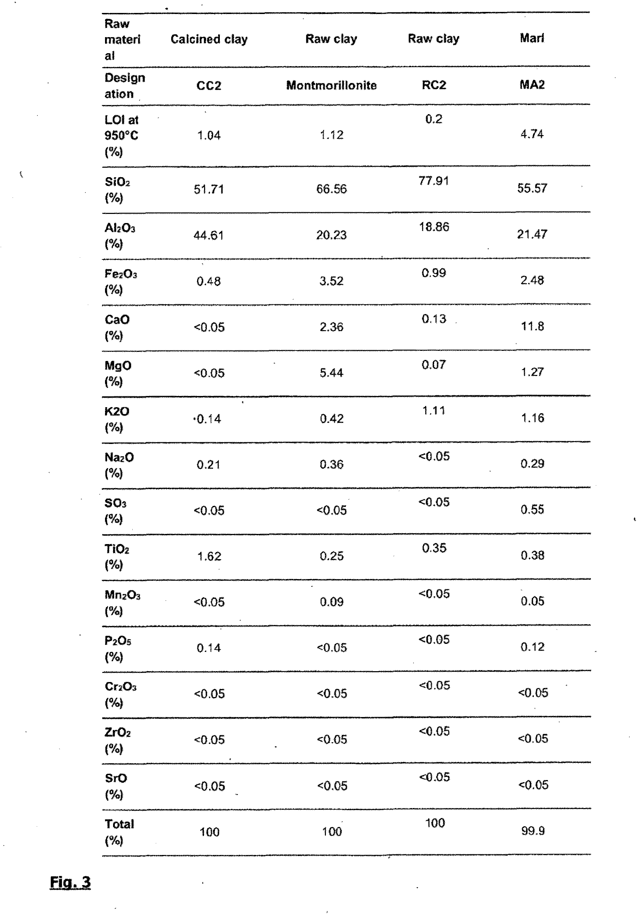

- Fig. 3:: a second table showing the chemical composition of the materials used;

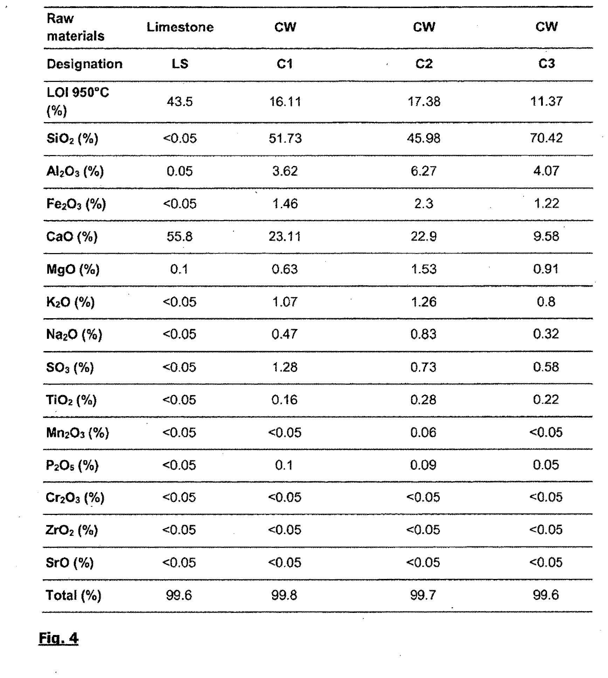

- Fig. 4:: a third table showing the chemical composition of the materials used;

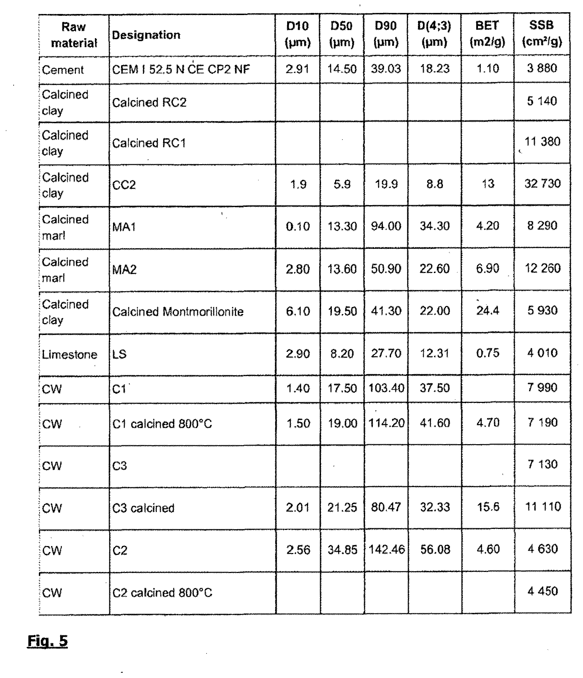

- Fig. 5:: a table showing the fineness of the used material;

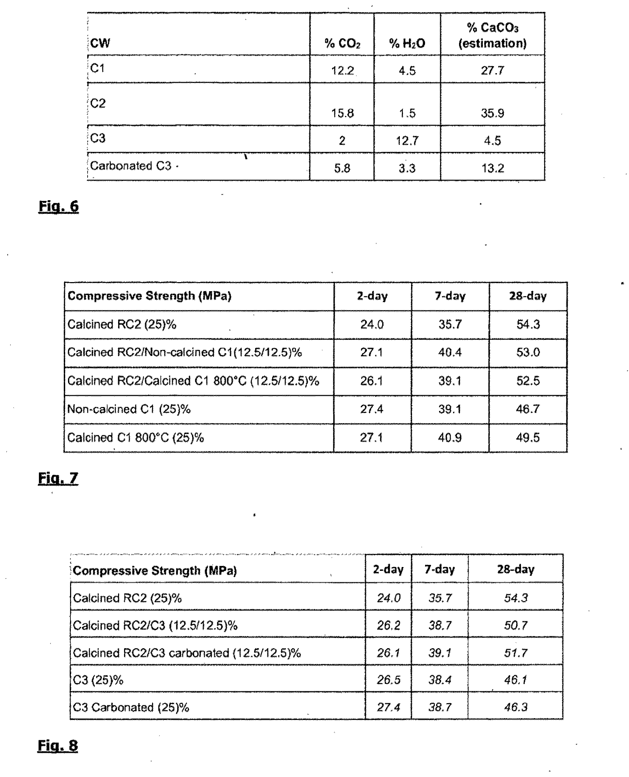

- Fig. 6:: a table showing the CO₂/H₂O analysis of the used CW;
- Fig. 7:: a table showing the compressive strength achieved in example 1;
- Fig. 8:: a table showing the compressive strength achieved in example 2;

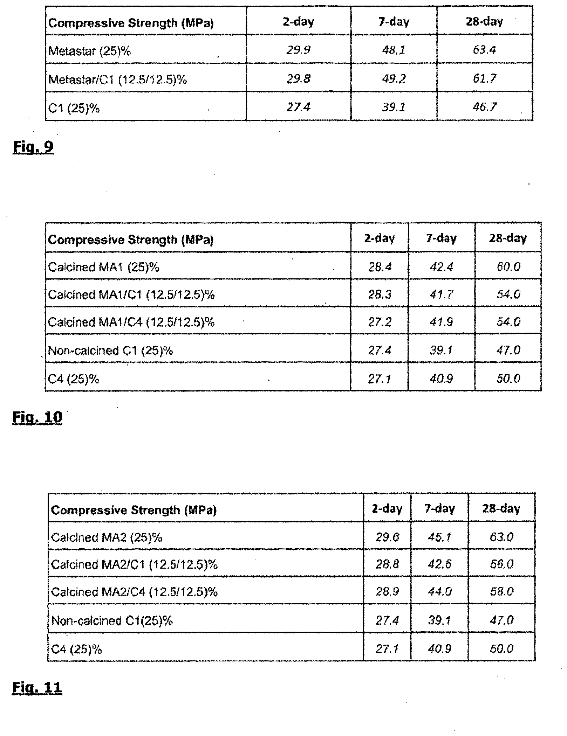

- Fig. 9:: a table showing the compressive strength achieved in example 3;
- Fig. 10:: a table showing the compressive strength achieved in example 4;
- Fig. 11:: a table showing the compressive strength achieved in example 5;
- Fig. 12:: a table showing the compressive strength achieved in example 6;
- Fig. 13:: a table showing the compressive strength achieved in example 7;
- Fig. 14:: a table showing the compressive strength achieved in example 8;

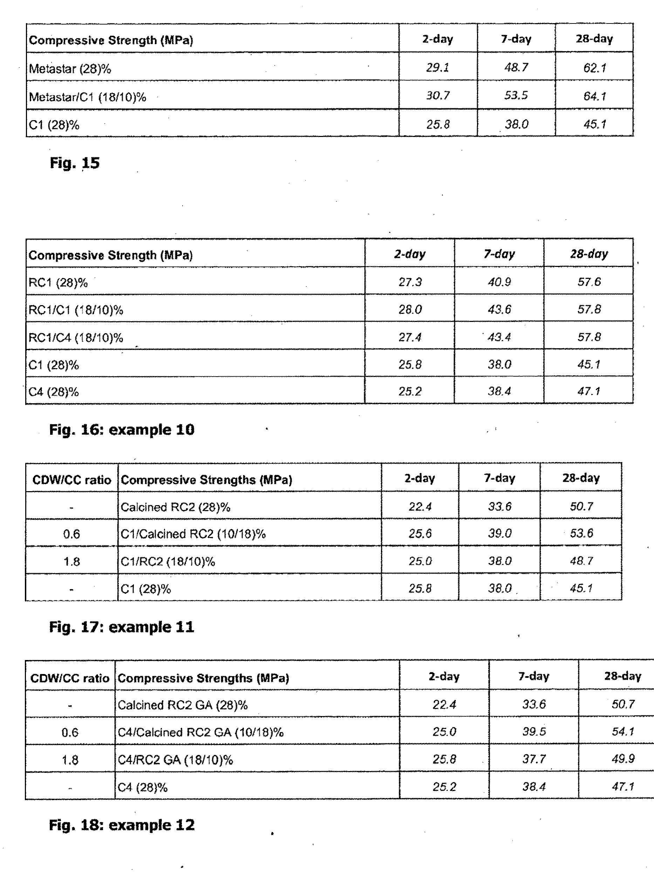

- Fig. 15:: a table showing the compressive strength achieved in example 9;
- Fig. 16:: a table showing the compressive strength achieved in example 10;
- Fig. 17:: a table showing the compressive strength achieved in example 11;
- Fig. 18:: a table showing the compressive strength achieved in example 12;

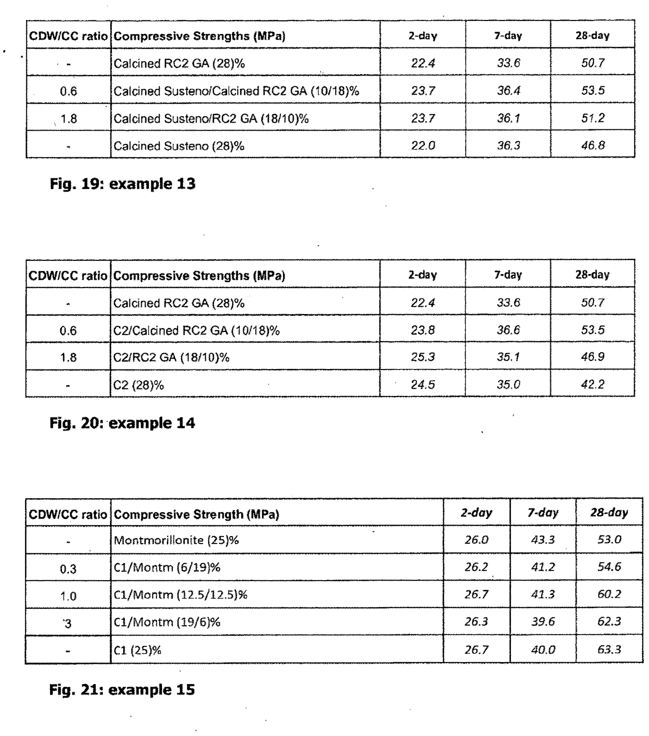

- Fig. 19:: a table showing the compressive strength achieved in example 13;
- Fig. 20:: a table showing the compressive strength achieved in example 14;
- Fig. 21:: a table showing the compressive strength achieved in example 15.

The selected CDWs were obtained from different sites, and were processed by crushing and screening at two cuts at 0/4 mm and 4/16 mm. Only the 0/4 mm fraction was used in this study.

The fraction of cement paste in CDWs are all comprised between 15 wt.-% and 45 wt.-%.

The CDWs are processed by crushing, and optionally carbonation and/or calcination in the laboratory.
a) Grinding
   i)Drying of the received CDWs in an oven at 105°C for 24 hours.
   ii)Grinding the dry CW in a heated ball mill until the target fineness of D50 between 15 and 20 µm is reached.
b) Optional carbonation
   i)The ground material (about 500 g) is mixed with water (w/s=0.4) and the paste is spread on an aluminum tray.
   ii)The tray is put in the carbonation equipment (DRUM):
      - Enclosure enriched to 100% CO₂
      - Temperature of 70°C
      - Pressure of 1 Bar
      - Duration 24 hours
   iil)After the end of carbonation, the carbonated CW is kept overnight in an oven at 80°C.
   iv)The CW is deagglomerated manually with a pestle and sieved at 100 µm.
c) Optional calcination process
   i)About 250 g of ground CW is placed into a platinum crucible and put in the furnace preheated to the temperature chosen for the calcination (800°C).
   ii)At the end of the calcination time (4 hours) the crucibles are left at room temperature to cool overnight.

### Compressive strength measurement

The CDWs were weighed and mixed in a bowl, according to the chosen proportion.

The compressive strengths of mortars prepared with processed and unprocessed CW were measured at 2, 7 and 28 days on standardized mortars according to the specifications of EN 196-1:216.

For all tests shown in the following examples 1 to 5, a composite cement is prepared by mixing a CEM I Portland cement with mineral components, in the following proportions: 75 wt.-% CEM I and 25 wt.-% of a mineral component. Depending on the test, the mineral component is either pure construction demolition waste, a calcined clay or a blend of CW and calcined clay wherein the CW / calcined clay weight ratio is 1/1.

Compressive strength is measured at 2, 7 and 28 days according to the protocol described in NF EN 196-1:2016.

For all tests shown in examples 1 to 5, a composite cement is prepared by mixing a CEM I Portland cement with mineral components, in the following proportions: 75 wt.-% CEM I and 25 wt.-% of a mineral component. Depending on the test, the mineral component is either pure construction demolition waste, a calcined clay or a blend of CW and calcined clay wherein the CW / calcined clay weight ratio is 1/1.

Compressive strength is measured at 2, 7 and 28 days according to the protocol described in NF EN 196-1:2016.

### Example 1

Calcined clay tested: RC2 GA
CW tested: C1 (non-calcined) and C4 (calcined at 800°C)
RC2 GA is a calcined clay at 800°C, and ground to a Blaine fineness of 5140 cm²/g.

The results show that the binder containing only calcined clay has a 2-day compressive strength of 24 MPa, and that of the binder containing only CW is just above 27 MPa. Surprisingly, substituting half the CW with the calcined clay has no impact on the compressive strength at 2 and 7 days: the measured value is as high as that of the CW alone. Furthermore, the strength at 28 days of the calcined clay / CW sample remains high, at about 53 MPa, even though the strength achieved when CW is used alone is below 50 MPa.

Furthermore, the calcination of CW has no significant impact on its performance at 2 and 7 days.

### Example 2

Calcined clay tested: RC2 GA (calcined at 800°C)
CW tested: C3 (non-carbonated and carbonated)

As in example 1, the results in the table below show that when calcined clay and CW are used together, the 2-day and 7-day strength remains as high as when the CW is used alone. This result is achieved regardless of the CW being carbonated or not.

### Example 3

Calcined clay tested: CC2 (60% commercial metakaolin + 40% of C400 silica)
CW tested: C1 0/4 mm (non-calcined)

The 2-day and 7-day strength of the Metastar/C1 binder remains higher than expected, even though in the present example and contrary to the examples 1 and 2, the cement that contains only calcined clay has higher compressive strength values than the cement with CW alone.

The synergistic effect of combining CW and calcined clays is also confirmed.

### Example 4

Tested calcined clay: MA1 (Marl) calcined at 800°C
Tested CW: C1 0/4 mm (non-calcined and calcined at 800°C)

The present example shows that there is no advantage in blending a calcined marl with CW: the compressive strength value of the cement containing a 1/1 blend of calcined marl and CW is an average of the values measured with CW alone and calcined marl alone.

These examples shows that there no synergistic effect between calcined marls and CW, even though marls contains clays too.

MA1 is a raw material that initially comprises high amounts of calcium oxide CaO. It is believed that for this reason, this example is not according to the present invention.

### Example 5

Calcined clay tested: MA2 (Marl)
CW tested: C1 0/4 mm (non-calcined and calcined at 800°C)

The example below shows that when a marl from MA2 is used, the synergistic effect with CW is not found to be as strong as in examples 1 to 3. However the 2-day and 7-day strength difference between the calcined marl and the blend of calcined marl and CW remains low.

CaO content can be a good indicator. CaO in the calcined clay shall not be > 15 wt.-% (preferably 12%). RC2, RC1 and CC2 respect this condition.

### Example 6

In the following example, a different cement composition is tested. The cement contains 72 wt.-% CEM I, and 28 wt.-% of a mineral component. The mineral component is either a calcined clay used alone, in combination with a limestone filler, or combination with CW. In all cases, the CW or limestone to calcined clay weight ratio is equal to 0.6, enabling a comparison of the behavior of CW vs. limestone.

The limestone filler is used as is, without any prior thermal treatment.
Calcined clay tested: RC2 GA (calcined at 800°C)
Limestone filler tested: BL200
CW tested: C1 (non-calcined) and C4 (C1 calcined at 800°C)

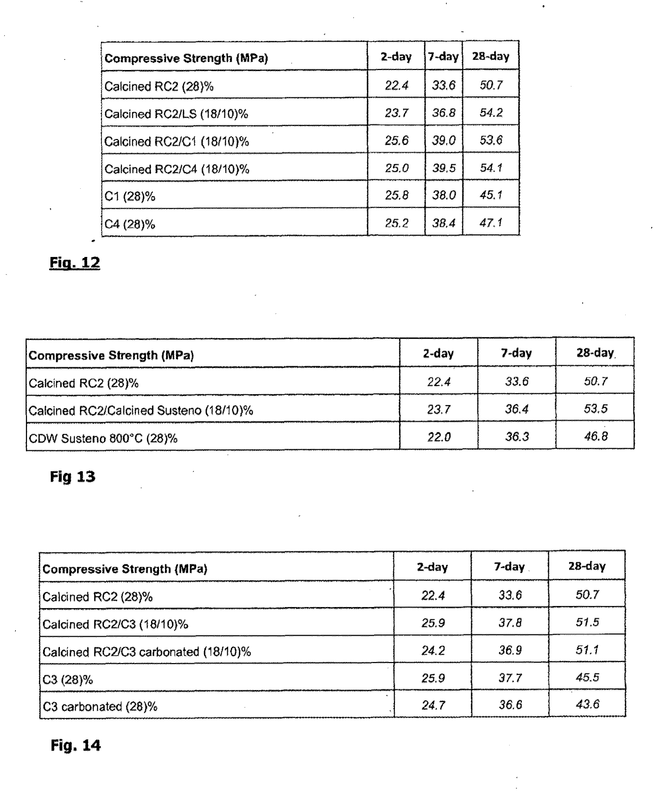

The results obtained are summarized in the Fig. 12, and show that the synergistic effect at 2 and 7 days is obtained only when calcined clay is used: the strength values of the calcined clay / CW samples are significantly higher at 2 and 7 days. Here too, the calcination of the CW does not have any significant impact on the strength obtained.

### Example 7

Calcined clay tested: RC2 GA
CW tested:C2 (calcined at 800°C)

In this example, a different CW is used. The results below confirm that the combination of the calcined clay together with this CW (C2) results in the same synergistic effect at 2 and 7 days.

### Example 8

Calcined clay tested: RC2 GA
CW tested: C3 (non-carbonated and carbonated)

The same synergistic effect is observed between this source of CW and calcined clay: the strength at 2 and 7 days remains surprisingly high when calcined clay is blended with CW.

### Example 9

Calcined clay tested: CC2
CW tested: C1 (non-calcined)

The same synergistic effect is observed in this example, where a different commercial calcined clay is used.

### Example 10

Calcined clay tested: RC1 (calcined at 800°C)
CW tested: C1 (non-calcined) and C4 (C1 calcined at 800°C)

The same synergistic effect is observed in this example, where a kaolinitic calcined clay RC1 is used.

### Example 11

The present example compares the effect of different CW/Calcined clay ratios.
Tested calcined clay: RC2 GA (calcined at 800°C)
Tested CW: C1

It can be seen, that the synergistic effect appears in a relatively wide range of ratios with regard to the early strength at 2 and 7 days. With regard to the strength at 28 days it is again shown that the synergistic effect occurs as the strength of the samples with C1/calcined RC2 with a ratio of 0.6 shows. The same appears in Examples 12 to 14 below.

### Example 12

Tested calcined clay: RC2 GA (calcined at 800°C)
Tested CW: C4 (C1 calcined at 800°C)

### Example 13

Tested calcined clay: RC2 GA (calcined at 800°C)
Tested CW: C2(Calcined at 800°C)

### Example 14

Tested calcined clay: RC2 GA (calcined at 800°C)
Tested CW: C2 (Non-calcined) / 36% SiO2 and 31% CaO

### Example 15

Mechanical performance using montmorillonite clay
Design: 75% CEM I 52.5 N + 25% MIC
Tested calcined clay: Montmorillonite (calcined at 800°C)
Tested CW: C4

In the present example, the synergistic effect shown above is not found. Montmorillonite-type clays therefore are not in the scope of the present invention.

### Conclusions

The CW - calcined clay synergy appears to work with Calcined Kaolinitic clays with CaO<15% (RC2, RC1, mix of pure MK + quartz) + CW with CaO>5% (3 CW: C1, concrete waste and C3 ON (CW rich in quartz aggregate SiO2>70%)).

The CW can be CW before treatment, carbonated CW or calcined CW.

The synergy appears when the CW/calcined clay weight ratio are 18/10 (1.80), 12.5/12.5 (1.00), 10/18 (0.56) and 6/19 (0.32). The synergy disappears when CW / calcined clay is 19/6 (3.17).

The invention allows reducing the release of CO₂ , avoiding a raw material which will be restricted in the future and ensuring high quality and high strength mineral building materials.

## Claims

1. Supplementary cementitious material (SCM) comprising calcined clay (CC) and concrete demolition waste (CW) in a ratio CW/CC from 0.32 to 3.15.

2. Supplementary cementitious material (SCM) according to claim 1 comprising calcined clay (CC) and concrete demolition waste (CW) wherein the ratio between CW/CC is 3.15 or 3 or 2.7 or 2.5 or 2.3 or 2.1 or 2.0 or 1.8 or 1.5 or 1.3 or 1.1 or 1 or 0.9 or 0.7 or 0.5 or 0.4 or 0.32.

3. Supplementary cementitious material (SCM) according to claim 1 or 2 wherein the calcined clay (CC) is made from a clay or a marl or a blend of a clay and a marl.

4. Supplementary cementitious material (SCM) according to one of the preceding claims wherein the calcined clay has a content of < 15 wt.-% of CaO based on the total weight of the Clay .

5. Supplementary cementitious material (SCM) according to claim 1 wherein the marl has a content of < 15 wt.-% CaCO₃ , in particular < 7 wt.-% of CaCO₃ based on the total weight of the Marl .

6. Supplementary cementitious material (SCM) according to one of the preceding claims wherein the CW has a CaO content of > 5 wt.-% based on the total weight of the CW.

7. Supplementary cementitious material (SCM) according to one of the preceding claims wherein the clay is a kaolinitic clay.

8. Supplementary cementitious material (SCM) according to claim 4 wherein the clay has a montmorillonite content of less than 10 wt-% based on the total weight of the clay.

9. Supplementary cementitious material (SCM) according to one of the preceding claims wherein the CW is a CW as it is or a carbonated CW or a calcined CW or a blend of two or more of the aforementioned CW.

10. Supplementary cementitious material (SCM) according to one of the preceding claims wherein the calcined clay has a Blaine fineness of at least 5000 cm²/g.

11. Supplementary cementitious material (SCM) according to one of the preceding claims wherein the CW has a Blaine fineness of at least 4000 cm²/g.

12. Supplementary cementitious material (SCM) according to one of the preceding claims wherein the CW contains at least 15 wt.-% of hardened cement paste.

13. Binder composition comprising at least the supplementary cementitious material (SCM) according to one of the preceding claims and portland cement clinker or ground portland cement and calcium sulfate.

14. Binder composition according to claim 13, comprising portland cement from 50 wt.-% to 90 wt.-% based on the total weight of the binder and SCM from 10 wt.-% to 50 wt.-% based on the total weight of the binder.

15. Concrete composition comprising the Binder composition of one of the claims 11 or 12, with a SCM according to one of the claims 1 to 12 as well as aggregates.

16. The use of the supplementary cementitious material of one of the claims 1 to 12 in cement compositions or in concrete compositions or for preparing a cement or concrete slurry.

17. Method for the production of a supplementary cementitious material (SCM) wherein calcined clay (CC) and concrete demolition waste (CW) in a ratio between CW/CC from 0.32 to 3.15.

18. Method according to claim 17 wherein the ratio between CW/CC is 3,15 or 3 or 2,7 or 2,5, or 2,3 or 2,1 or 2,0 or 1,8 or 1,5 or 1,3 or 1,1 or 1 or 0,9 or 0,7 or 0,5 or 0,4 or 0,32.

19. Method according to claim 17 or 18 wherein the calcination of the Calcined clay is achieved in a rotary kiln for 30 minutes to 2 hours, in particular 30 minutes to one hour.

20. Method according to one of the claims 17 to 19 wherein the calcination of the CW is achieved in a rotary kiln for 30 minutes to 2 hours, in particular 30 minutes to one hour.

21. Method according to one of the claims 17 to 20 wherein CW and CC are calcined together.

22. Method according to one of the claims 17 to 21 wherein calcination is conducted at temperatures above 750°C to 1000°C, in particular 800°C to 950°C, preferred 800°C to 900°C.

23. Method according to one of the claims 17 to 22 wherein the calcined clay is ground during or after calcination to a Blaine fineness of at least 5000 cm²/g.

24. Method according to one of the claims 17 to 23 wherein the CW is ground before, during or after calcination to a Blaine fineness of at least 4000 cm2 /g.
